# EUROPEAN PATENT APPLICATION

(11) **EP 4 293 774 A1**
(43) Date of publication of application: **20.12.2023**
(21) Application number: 21925861.3
(22) Date of filing: 23.12.2021
(51) Int. Cl.: H01M 10/052, H01M 10/0562, H01M 10/0585, H01M 50/10, H01M 50/572

(54) **BATTERY AND METHOD FOR PRODUCING BATTERY**

(30) Priority: 15.02.2021 JP 2021022052
(71) Applicant: Panasonic Intellectual Property Management Co., Ltd., Osaka 571-0057 (JP)
(72) Inventor: HONDA, Kazuyoshi, Tokyo 103-002 (JP); KAWASE, Akira, Tokyo 103-002 (JP); KOGA, Eiichi, Tokyo 103-002 (JP); HIRANO, Koichi, Tokyo 103-002 (JP); MORIOKA, Kazuhiro, Tokyo 103-002 (JP); NISHIDA, Kouji, Tokyo 103-002 (JP)
(74) Representative: Eisenführ Speiser
(86) International application number: PCT/JP2021/047812
(87) International publication number: WO 2022/172618

(57) **Abstract**

A battery (1) includes a power generation element (10) which includes a plurality of unit cells (100). The unit cells (100) are electrically connected in parallel and are stacked in a direction normal to a main surface. In a side surface (13), positive electrode layers (120) protrude more than negative electrode layers (110), and thus depressions (13a) and projections (13b) are provided. In a side surface (14), the negative electrode layers (110) protrude more than the positive electrode layers (120), and thus depressions (14a) and projections (14b) are provided. The depression (13a) includes an inclination surface which is the end surface (110a) of the negative electrode layer (110). The depression (14a) includes an inclination surface which is the end surface (120a) of the positive electrode layer (120). The battery (1) further includes: insulating members (21) arranged in the depressions (13a); insulating members (22) arranged in the depressions (14a); a conductive member (31) in contact with the projections (13b); and a conductive member (32) in contact with the projections (14b).

## Description

### [Technical Field]

The present disclosure relates to batteries and methods for manufacturing batteries.

### [Background Art]

Conventionally, batteries in which current collectors and active material layers are stacked are known (see, for example, Patent Literatures (PTLs) 1 to 3).

For example, PTL 1 discloses a secondary battery in which a plurality of units each including a current collector serving as a positive electrode, a separator, and a current collector serving as a negative electrode are stacked. In this configuration, an attempt is made to increase the capacity of the secondary battery.

### [Citation List]

### [Patent Literature]

[PTL 1] Japanese Unexamined Patent Application Publication No. 2015-233003
[PTL 2] Japanese Unexamined Patent Application Publication No. 2009-16188
[PTL 3] International Publication No. 2019/039412

### [Summary of Invention]

### [Technical Problem]

In order to increase the capacity density of a battery, it is required to reduce the thickness of a unit cell. However, as the thickness of the unit cell becomes smaller, a short circuit is more likely to occur at the end surface of the unit cell, and thus the reliability of the battery is impaired.

Hence, the present disclosure provides a battery which can achieve both a high capacity density and high reliability and a method for manufacturing a battery.

### [Solution to Problem]

A battery according to an aspect of the present disclosure includes: a power generation element that includes a plurality of unit cells each including a positive electrode layer, a negative electrode layer, and a solid electrolyte layer located between the positive electrode layer and the negative electrode layer, the plurality of unit cells are electrically connected in parallel and are stacked in a direction normal to a main surface of the power generation element, the power generation element includes a first side surface and a second side surface, in the first side surface, each of the positive electrode layers in the plurality of unit cells protrudes more than each of the negative electrode layers in the plurality of unit cells such that first depressions and first projections arranged alternately in the direction normal to the main surface are provided, in the second side surface, each of the negative electrode layers in the plurality of unit cells protrudes more than each of the positive electrode layers in the plurality of unit cells such that second depressions and second projections arranged alternately in the direction normal to the main surface are provided, each of the first depressions includes a first inclination surface that is inclined relative to the direction normal to the main surface and is an end surface of the negative electrode layer, each of the second depressions includes a second inclination surface that is inclined relative to the direction normal to the main surface and is an end surface of the positive electrode layer, the battery further includes: one or a plurality of first insulating members that are arranged in the first depressions; one or a plurality of second insulating members that are arranged in the second depressions; a first conductive member that is in contact with the first projections; and a second conductive member that is in contact with the second projections, the positive electrode layers in the plurality of unit cells are electrically connected via the first conductive member, and the negative electrode layers in the plurality of unit cells are electrically connected via the second conductive member.

A method for manufacturing a battery according to an aspect of the present disclosure includes: preparing a plurality of unit cells each including a positive electrode layer, a negative electrode layer, and a solid electrolyte layer located between the positive electrode layer and the negative electrode layer, in a first end surface of each of the plurality of unit cells, a first inclination surface that is inclined relative to a direction normal to a main surface of a power generation element is provided on an end surface of the negative electrode layer such that the positive electrode layer protrudes more than the negative electrode layer, in a second end surface of the unit cell, a second inclination surface that is inclined relative to the direction normal to the main surface is provided on an end surface of the positive electrode layer such that the negative electrode layer protrudes more than the positive electrode layer, and the method for manufacturing a battery further includes: stacking the plurality of unit cells in the direction normal to the main surface by causing positive electrode layers each being the positive electrode layer or negative electrode layers each being the negative electrode layer to face each other, aligning protrusion portions of the positive electrode layers, and aligning protrusion portions of the negative electrode layers, arranging a first insulating member such that the first insulating member covers the first inclination surface and arranging a second insulating member such that the second insulating member covers the second inclination surface, and arranging a first conductive member that electrically connects the protrusion portions of the positive electrode layers and arranging a second conductive member that electrically connects the protrusion portions of the negative electrode layers.

### [Advantageous Effects of Invention]

In a battery according to the present disclosure, it is possible to achieve both a high capacity density and high reliability.

### [Brief Description of Drawings]

[FIG. 1]

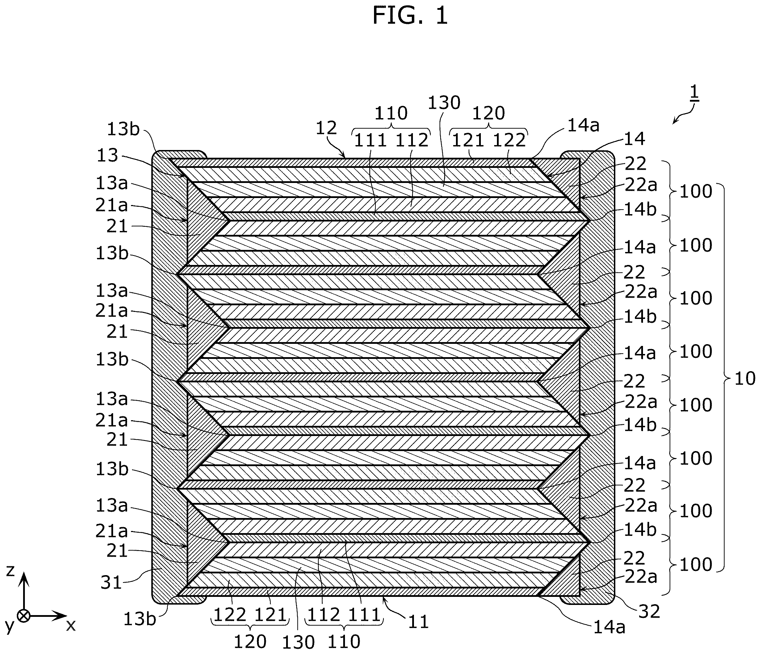

   FIG. 1 is a cross-sectional view showing a cross-sectional configuration of a battery according to Embodiment 1.
[FIG. 2]

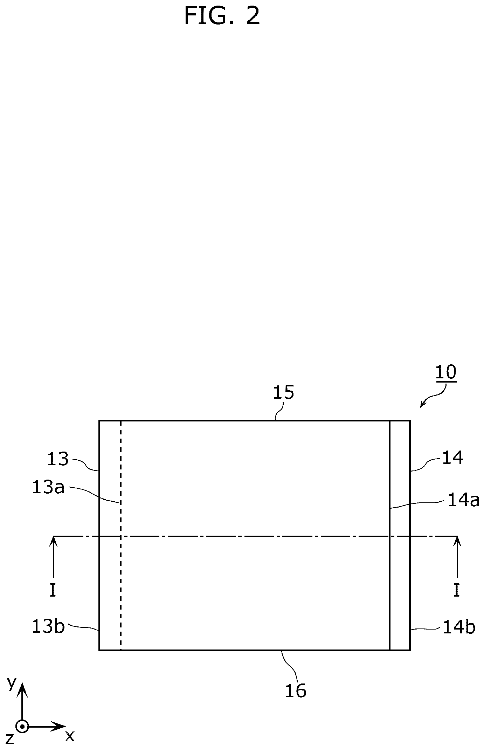

   FIG. 2 is a plan view of the power generation element of the battery according to Embodiment 1.
[FIG. 3A]

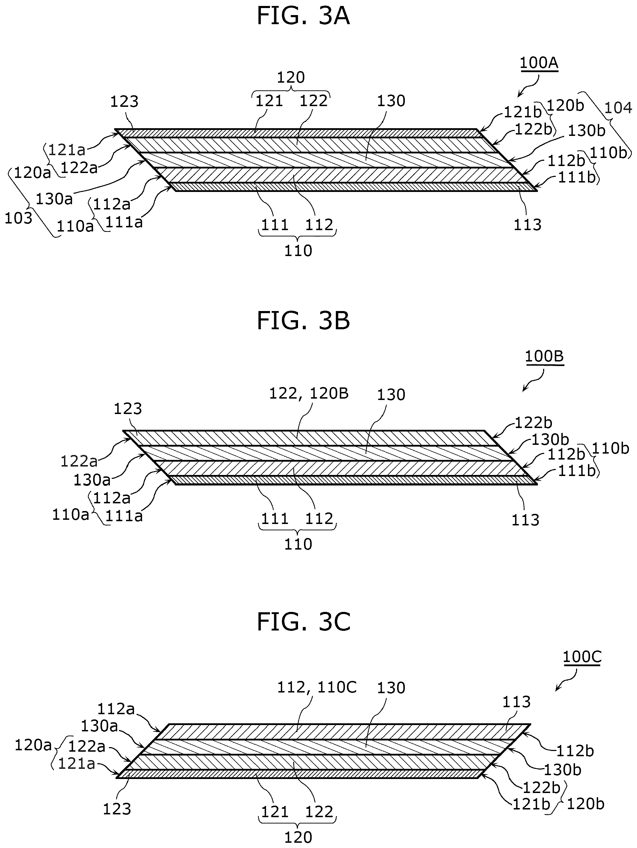

   FIG. 3A is a cross-sectional view showing a cross-sectional configuration of a first example of a unit cell included in the power generation element in Embodiment 1.
[FIG. 3B]
   FIG. 3B is a cross-sectional view showing a cross-sectional configuration of a second example of the unit cell included in the power generation element in Embodiment 1.
[FIG. 3C]
   FIG. 3C is a cross-sectional view showing a cross-sectional configuration of a third example of the unit cell included in the power generation element in Embodiment 1.
[FIG. 4A]

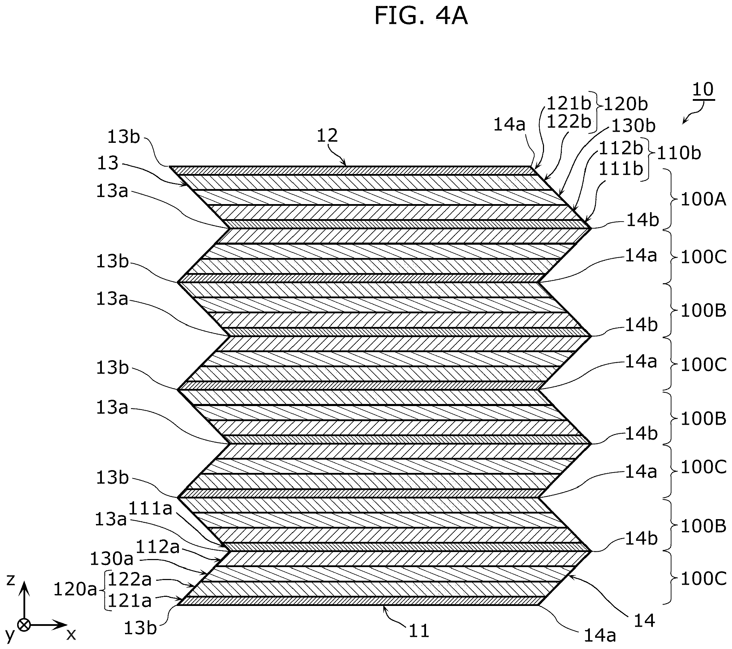

   FIG. 4A is a cross-sectional view showing a cross-sectional configuration of the power generation element in Embodiment 1.
[FIG. 4B]

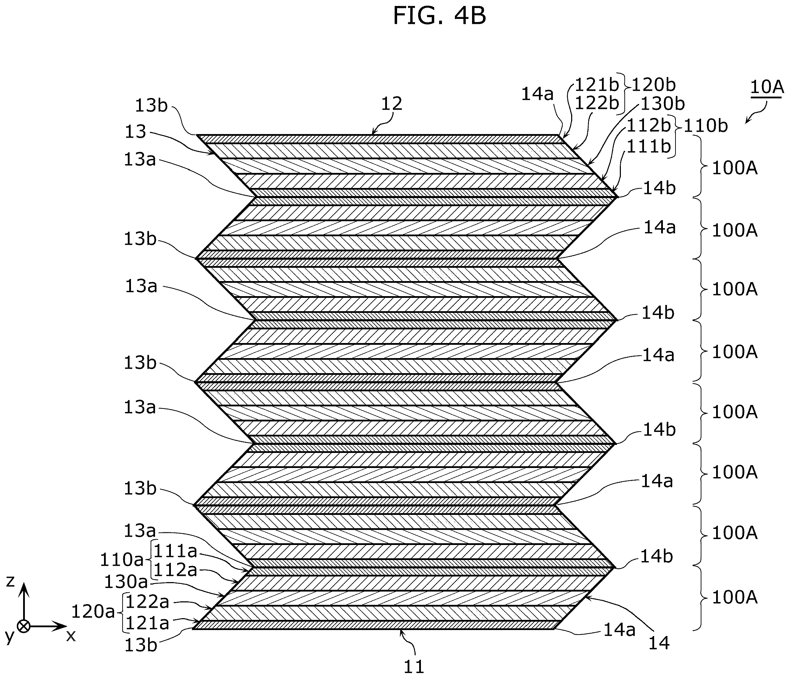

   FIG. 4B is a cross-sectional view showing a cross-sectional configuration of a variation of the power generation element in Embodiment 1.
[FIG. 5]

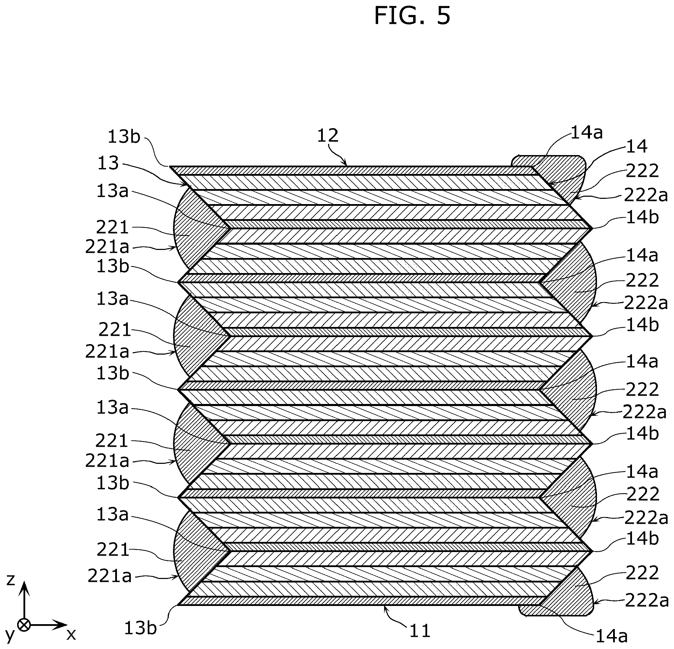

   FIG. 5 is a cross-sectional view showing a cross-sectional configuration of a variation of insulating members in Embodiment 1.
[FIG. 6]

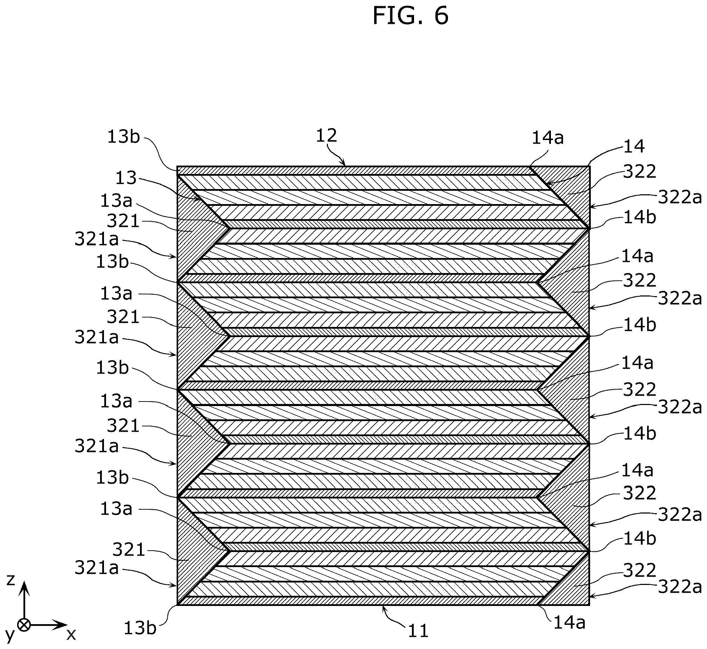

   FIG. 6 is a cross-sectional view showing a cross-sectional configuration of another variation of the insulating members in Embodiment 1.
[FIG. 7A]

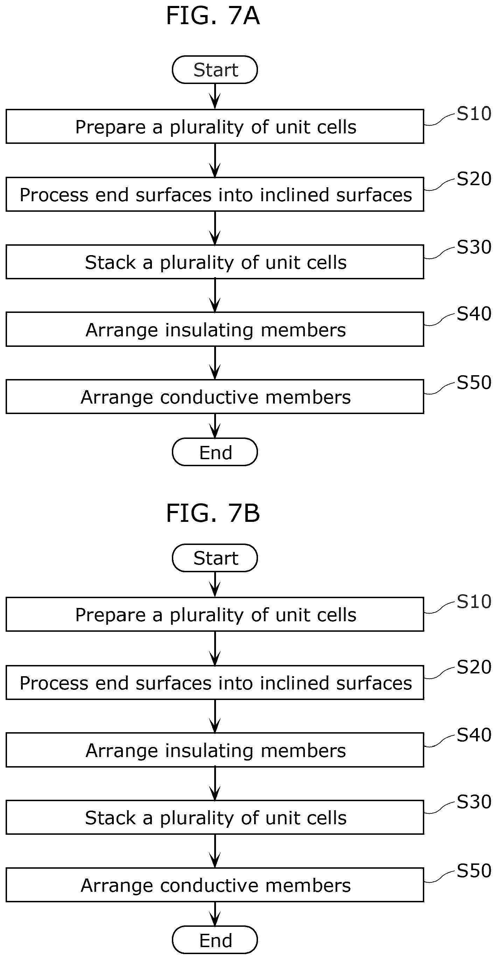

   FIG. 7A is a flowchart showing an example of a method for manufacturing the battery according to Embodiment 1.
[FIG. 7B]
   FIG. 7B is a flowchart showing another example of the method for manufacturing the battery according to Embodiment 1.
[FIG. 8]

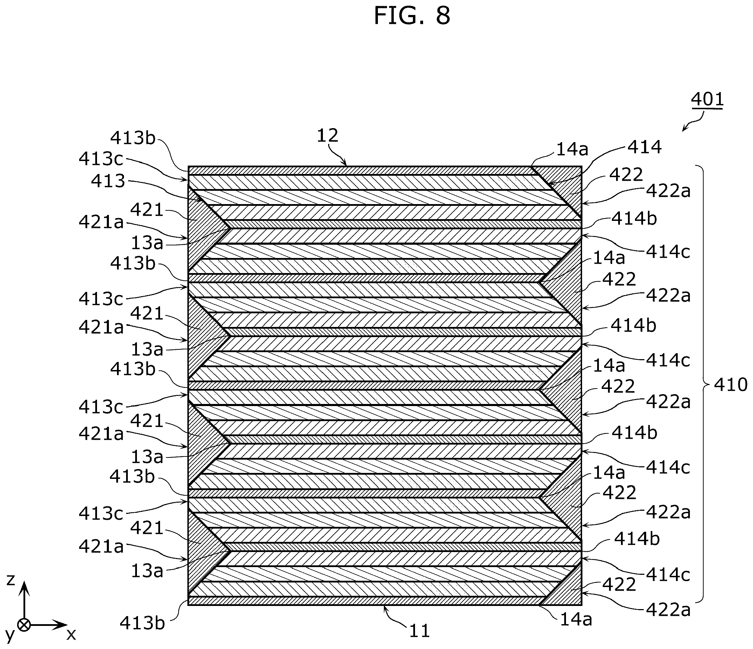

   FIG. 8 is a cross-sectional view showing a cross-sectional configuration of a battery according to Embodiment 2.
[FIG. 9A]

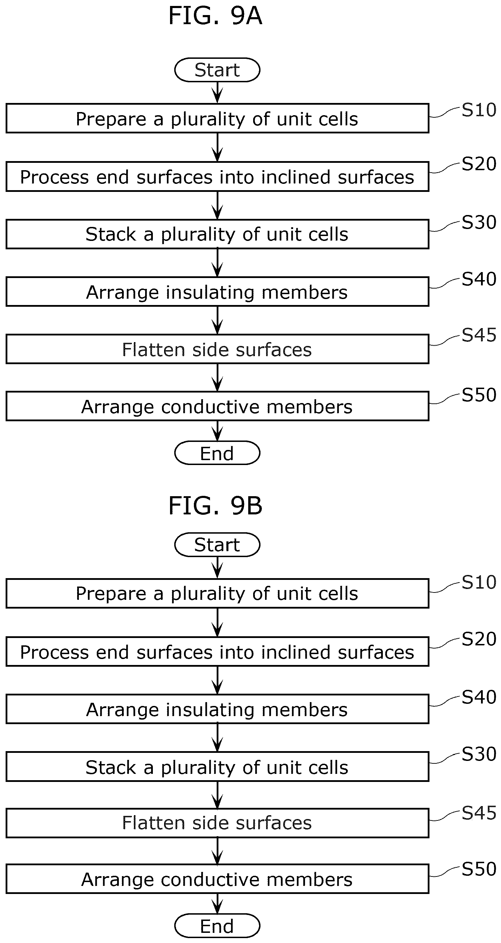

   FIG. 9A is a flowchart showing an example of a method for manufacturing the battery according to Embodiment 2.
[FIG. 9B]
   FIG. 9B is a flowchart showing an example of the method for manufacturing the battery according to Embodiment 2.
[FIG. 10]

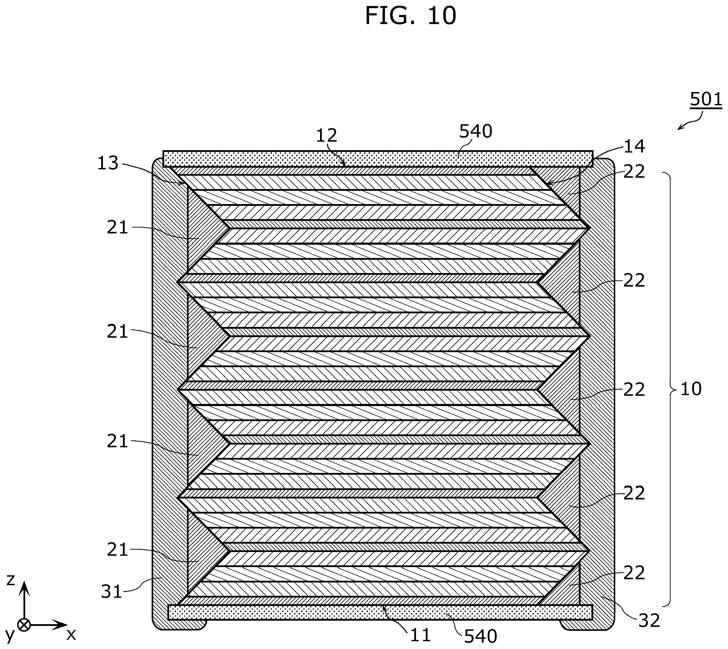

   FIG. 10 is a cross-sectional view showing a cross-sectional configuration of a battery according to Embodiment 3.
[FIG. 11]

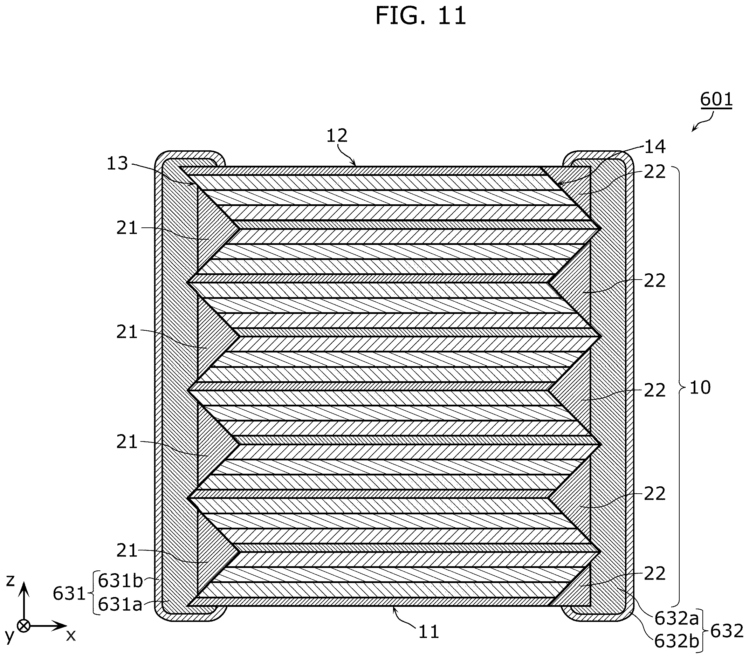

   FIG. 11 is a cross-sectional view showing a cross-sectional configuration of a battery according to Embodiment 4.
[FIG. 12]

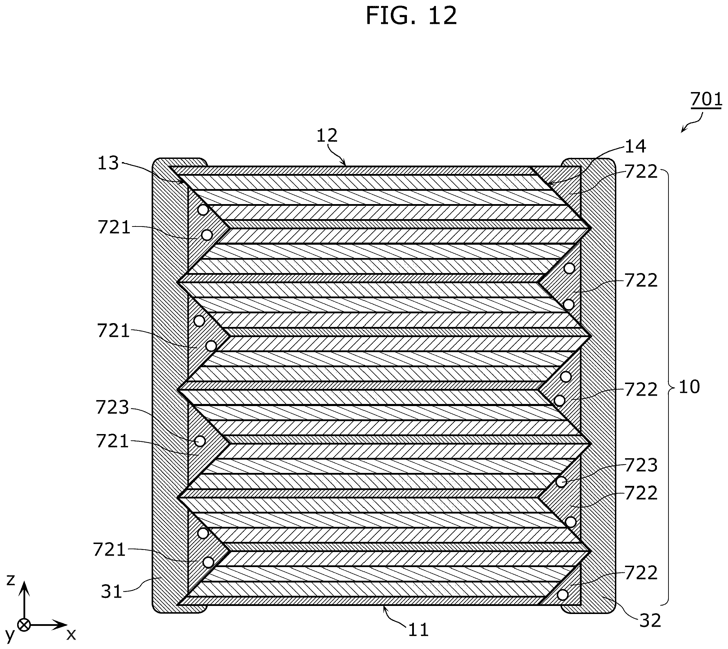

   FIG. 12 is a cross-sectional view showing a cross-sectional configuration of a battery according to Embodiment 5.

### [Description of Embodiments]

### (Outline of present disclosure)

A battery according to an aspect of the present disclosure includes: a power generation element that includes a plurality of unit cells each including a positive electrode layer, a negative electrode layer, and a solid electrolyte layer located between the positive electrode layer and the negative electrode layer, the plurality of unit cells are electrically connected in parallel and are stacked in a direction normal to a main surface of the power generation element, the power generation element includes a first side surface and a second side surface, in the first side surface, each of the positive electrode layers in the plurality of unit cells protrudes more than each of the negative electrode layers in the plurality of unit cells such that first depressions and first projections arranged alternately in the direction normal to the main surface are provided, in the second side surface, each of the negative electrode layers in the plurality of unit cells protrudes more than each of the positive electrode layers in the plurality of unit cells such that second depressions and second projections arranged alternately in the direction normal to the main surface are provided, each of the first depressions includes a first inclination surface that is inclined relative to the direction normal to the main surface and is an end surface of the negative electrode layer, each of the second depressions includes a second inclination surface that is inclined relative to the direction normal to the main surface and is an end surface of the positive electrode layer, the battery further includes: one or a plurality of first insulating members that are arranged in the first depressions; one or a plurality of second insulating members that are arranged in the second depressions; a first conductive member that is in contact with the first projections; and a second conductive member that is in contact with the second projections, the positive electrode layers in the plurality of unit cells are electrically connected via the first conductive member, and the negative electrode layers in the plurality of unit cells are electrically connected via the second conductive member.

In this way, the end surfaces of the negative electrode layers are the inclination surfaces, and thus in the first side surface of the power generation element serving as the multilayer of the unit cells, the positive electrode layers can be caused to protrude. Since in the first side surface, the end surfaces of the negative electrode layers are covered by the first insulating members arranged in the first depressions, when the first projections including the end surfaces of the positive electrode layers are electrically connected, it is possible to suppress the occurrence of a short circuit between the positive electrode layers and the negative electrode layers. Likewise, the end surfaces of the positive electrode layers are the inclination surfaces, and thus in the second side surface of the power generation element serving as the multilayer of the unit cells, the negative electrode layers can be caused to protrude. Since in the second side surface, the end surfaces of the positive electrode layers are covered by the second insulating members arranged in the second depressions, when the second projections including the end surfaces of the negative electrode layers are electrically connected, it is possible to suppress the occurrence of a short circuit between the positive electrode layers and the negative electrode layers. The occurrence of a short circuit is suppressed, and thus it is possible to reduce the thickness of the unit cell, with the result that both a high capacity density and high reliability can be achieved.

For example, the first conductive member may cover the one or the plurality of first insulating members, and the second conductive member may cover the one or the plurality of second insulating members.

In this way, the positive electrode layers can be connected easily and electrically by the first conductive member so as to straddle the first insulating members. Likewise, the negative electrode layers can be connected easily and electrically by the second conductive member so as to straddle the second insulating members. Hence, it is possible to enhance the reliability of the connection of the positive electrode layers and the first conductive member and the reliability of the connection of the negative electrode layers and the second conductive member.

For example, each of the first projections may include a third inclination surface that is inclined relative to the direction normal to the main surface and is at least a part of an end surface of the positive electrode layer, and each of the second projections may include a fourth inclination surface that is inclined relative to the direction normal to the main surface and is at least a part of an end surface of the negative electrode layer.

In this way, the end surface of the positive electrode layer included in the first projection can be separated away from the end surface of the negative electrode layer included in the first depression. Likewise, the end surface of the negative electrode layer included in the second projection can be separated away from the end surface of the positive electrode layer included in the second depression. Hence, it is possible to more significantly suppress the occurrence of a short circuit between the positive electrode layers and the negative electrode layers, with the result that it is possible to further enhance the reliability of the battery.

For example, the first inclination surface, the third inclination surface, and a part of an end surface of the solid electrolyte layer may be flush with each other, and the second inclination surface, the fourth inclination surface, and a part of an end surface of the solid electrolyte layer may be flush with each other.

In this way, the end surface of the positive electrode layer included in the first projection can be further separated away from the end surface of the negative electrode layer included in the first depression. Likewise, the end surface of the negative electrode layer included in the second projection can be further separated away from the end surface of the positive electrode layer included in the second depression. Hence, it is possible to far more significantly suppress the occurrence of a short circuit between the positive electrode layers and the negative electrode layers. The end surfaces of the positive electrode layer, the solid electrolyte layer, and the negative electrode layer can be processed collectively and obliquely.

For example, each of the first projections may include a first flat surface that is parallel to the direction normal to the main surface and is at least a part of an end surface of the positive electrode layer, and each of the second projections may include a second flat surface that is parallel to the direction normal to the main surface and is at least a part of an end surface of the negative electrode layer.

In this way, it is possible to achieve good contact between the flat surface which is at least a part of the end surface of the positive electrode layer and the first conductive member, and thus it is possible to realize a reduction in connection resistance between the positive electrode layer and the first conductive member and the enhancement of reliability. Likewise, it is possible to achieve good contact between the flat surface which is at least a part of the end surface of the negative electrode layer and the second conductive member, and thus it is possible to realize a reduction in connection resistance between the negative electrode layer and the second conductive member and the enhancement of reliability.

For example, the one or the plurality of first insulating members may include a side surface that is flush with the first flat surface, and the one or the plurality of second insulating members may include a side surface that is flush with the second flat surface.

In this way, since no step is formed between the positive electrode layer and the first insulating member, the positive electrode layers can be covered without gaps by the first conductive member so as to straddle the first insulating members, with the result that it is possible to achieve good contact between the positive electrode layers and the first conductive member. Likewise, since no step is formed between the negative electrode layer and the second insulating member, the negative electrode layers can be covered without gaps by the second conductive member so as to straddle the second insulating members, with the result that it is possible to achieve good contact between the negative electrode layers and the second conductive member.

For example, each of the positive electrode layers in the plurality of unit cells may include: a positive electrode current collector; and a positive electrode active material layer that is arranged on a main surface of the positive electrode current collector on a side of the negative electrode layer, and each of the negative electrode layers in the plurality of unit cells may include: a negative electrode current collector; and a negative electrode active material layer that is arranged on a main surface of the negative electrode current collector on a side of the positive electrode layer.

In this way, a plurality of unit cells having the same configuration are stacked while the unit cells are being alternately inverted, and thus it is possible to easily form the power generation element of the multilayer in which the positive electrode layers protrude in the first side surface and the negative electrode layers protrude in the second side surface.

For example, in the plurality of unit cells, an adjacent pair of the positive electrode layers may share the positive electrode current collector, and in the plurality of unit cells, an adjacent pair of the negative electrode layers may share the negative electrode current collector.

In this way, it is possible to reduce the number of current collectors, and thus the capacity density of the battery can be further increased.

For example, at least one of the first conductive member or the second conductive member may include a multilayer structure.

In this way, each of the layers in the multilayer structure can be caused to have a different function. For example, as the innermost layer in contact with the positive electrode layer or the negative electrode layer, a conductive material having low connection resistance can be utilized, and as the outermost layer, a conductive material having high durability can be used. Hence, the reliability of the battery can be enhanced.

For example, an outermost layer in the multilayer structure may be a plating layer or a solder layer.

In this way, it is possible to realize a reduction in resistance, high heat resistance, high durability or the like of the outermost layer.

For example, the battery according to the one aspect of the present disclosure may further include : a sealing member that exposes a part of the first conductive member and a part of the second conductive member and seals the power generation element.

In this way, the power generation element can be protected from external factors such as humidity and impact, and thus the reliability of the battery can be enhanced.

For example, at least one of the one or the plurality of first insulating members or the one or the plurality of second insulating members may include a gap.

In this way, when heat generated during the use of the battery causes the power generating element to expand or contract, the resulting stress can be relaxed by the gaps. Hence, the breakage of the power generation element is suppressed, and thus it is possible to enhance the reliability of the battery.

For example, the first side surface and the second side surface may face away from each other.

In this way, the end surface of the positive electrode layer included in the first projection can be separated away from the end surface of the negative electrode layer included in the second projection, with the result that the occurrence of a short circuit can be suppressed.

A method for manufacturing a battery according to an aspect of the present disclosure includes: preparing a plurality of unit cells each including a positive electrode layer, a negative electrode layer, and a solid electrolyte layer located between the positive electrode layer and the negative electrode layer, in a first end surface of each of the plurality of unit cells, a first inclination surface that is inclined relative to a direction normal to a main surface of a power generation element is provided on an end surface of the negative electrode layer such that the positive electrode layer protrudes more than the negative electrode layer, in a second end surface of the unit cell, a second inclination surface that is inclined relative to the direction normal to the main surface is provided on an end surface of the positive electrode layer such that the negative electrode layer protrudes more than the positive electrode layer, and the method for manufacturing a battery further includes: stacking the plurality of unit cells in the direction normal to the main surface by causing positive electrode layers each being the positive electrode layer or negative electrode layers each being the negative electrode layer to face each other, aligning protrusion portions of the positive electrode layers, and aligning protrusion portions of the negative electrode layers, arranging a first insulating member such that the first insulating member covers the first inclination surface and arranging a second insulating member such that the second insulating member covers the second inclination surface, and arranging a first conductive member that electrically connects the protrusion portions of the positive electrode layers and arranging a second conductive member that electrically connects the protrusion portions of the negative electrode layers.

In this way, it is possible to manufacture the battery which can achieve both a high capacity density and high reliability.

Specifically, the unit cells in which at least a part of the end surfaces are the inclination surfaces are stacked, and thus the power generation element including a first side surface in which the positive electrode layers protrude and a second side surface in which the negative electrode layers protrude can be formed. The insulating members are arranged in the depressions of the first side surface and the second side surface, and thus in the first side surface, the positive electrode layers and the negative electrode layers which protrude can be insulated and in the second side surface, the negative electrode layers and the positive electrode layers which protrude can be insulated. In this state, the conductive member is arranged in each of the first side surface and the second side surface, and thus the protruding positive electrode layers can be connected collectively and electrically and the protruding negative electrode layers can be connected collectively and electrically. In this way, it is possible to collect power from each of the unit cells connected in parallel. Current collection tabs are not needed, and thus a significant decrease in capacity density is suppressed, with the result that the highly reliable battery can be obtained.

For example, the arranging of the first insulating member may be performed after the stacking.

In this way, the first insulating members and the second insulating members can be collectively arranged in the first depressions and the second depressions, and thus it is possible to reduce the time required for the step.

For example, the stacking may be performed after the arranging of the first insulating member.

In this way, the first insulating members and the second insulating members can be arranged in each of the unit cells individually and accurately, and thus it is possible to more significantly suppress the occurrence of a short circuit between the positive electrode layers and the negative electrode layers.

For example, in the preparing, the first end surface and the second end surface of each of the plurality of unit cells may be processed to prepare the plurality of unit cells in which first inclination surfaces each being the first inclination surface and second inclination surfaces each being the second inclination surface are provided.

In this way, the inclination surface having a desired shape can be formed, and thus it is possible to adjust the amount of protrusion of the positive electrode layer or the negative electrode layer.

For example, the processing in the preparing may be performed by shear cutting, score cutting, razor cutting, ultrasonic cutting, laser cutting, jet cutting, or polishing.

In this way, the end surfaces can easily be processed.

For example, in the processing in the preparing, on the first end surface, the end surface of the negative electrode layer, an end surface of the solid electrolyte layer, and an end surface of the positive electrode layer may be collectively inclined obliquely relative to the direction normal to the main surface, and on the second end surface, an end surface of the negative electrode layer, an end surface of the solid electrolyte layer, and the end surface of the positive electrode layer may be collectively inclined obliquely relative to the direction normal to the main surface.

In this way, the end surfaces in each of the unit cells are collectively processed, and thus it is possible to reduce the time required for the step.

For example, the method for manufacturing a battery may further include: flattening, after the stacking and the arranging of the first insulating member have been performed, the protrusion portions of the positive electrode layers and first insulating members each being the first insulating member and flattening the protrusion portions of the negative electrode layers and the second insulating members each being the second insulating member before the arranging of the first conductive member is performed.

In this way, in the arranging of the first conductive member, the conductive member can be arranged on the flat surface, and thus it is possible to realize a decrease in connection resistance between each of the positive electrode layer and the negative electrode layer and the conductive member and the enhancement of reliability.

Embodiments will be specifically described below with reference to drawings.

Each of the embodiments described below shows a comprehensive or specific example. Numerical values, shapes, materials, constituent elements, the arrangement and connection of the constituent elements, steps, the order of the steps, and the like shown in the following embodiments are examples, and are not intended to limit the present disclosure. Among the constituent elements in the following embodiments, constituent elements which are not recited in the independent claims are described as optional constituent elements.

The drawings are schematic views and are not exactly shown. Hence, for example, scales and the like are not necessarily the same in the drawings. In the drawings, substantially the same configurations are identified with the same reference signs, and repeated descriptions are omitted or simplified.

In the present specification, terms such as parallel and orthogonal which indicate relationships between elements, terms such as rectangular and circular which indicate the shapes of elements, and numerical ranges are expressions which not only indicate exact meanings but also indicate substantially equivalent ranges such as a range including a several percent difference.

In the present specification and the drawings, an x-axis, a y-axis, and a z-axis indicate three axes of a three-dimensional orthogonal coordinate system. When the shape of the power generation element of a battery in plan view is a rectangle, the x-axis and the y-axis respectively extend in a direction parallel to a first side of the rectangle and in a direction parallel to a second side orthogonal to the first side. The z-axis extends in the stacking direction of a plurality of unit cells included in the power generation element. In the present specification, the "stacking direction" coincides with a direction normal to the main surfaces of a current collector and an active material layer. In the present specification, the "plan view" is a view when viewed in a direction perpendicular to the main surface unless otherwise specified.

In the present specification, terms of "upward" and "downward" do not indicate an upward direction (vertically upward) and a downward direction (vertically downward) in absolute spatial recognition but are used as terms for defining a relative positional relationship based on a stacking order in a stacking configuration. The terms of "upward" and "downward" are applied not only to a case where two constituent elements are spaced with another constituent element present between the two constituent elements but also to a case where two constituent elements are arranged in close contact with each other to be in contact with each other. In the following description, the negative side of the z-axis is assumed to be "downward" or a "downward side", and the positive side of the z-axis is assumed to be "upward" or an "upward side".

In the present specification, unless otherwise specified, the term "protrude" means protruding externally relative to the center of the unit cell in a cross-sectional view orthogonal to the main surface of the unit cell. The sentence "element A protrudes more than element B" means that in the direction of protrusion, the tip end of element A protrudes more than the tip end of element B, that is, the tip end of element A is located more distantly from the center of the unit cell than the tip end of element B. The "direction of protrusion" is regarded as being a direction parallel to the main surface of the unit cell. The "protrusion portion of element A" means a part of element A which protrudes more than the tip end of element B in the direction of protrusion. Examples of the element include an electrode layer, an active material layer, a solid electrolyte layer, a current collector, and the like.

In the present specification, unless otherwise specified, ordinal numbers such as "first" and "second" do not mean the number or order of constituent elements but are used to avoid confusion of similar constituent elements and to distinguish between them.

### (Embodiment 1)

### [1. Outline]

An outline of a battery according to Embodiment 1 will first be described with reference to FIGS. 1 and 2.

FIG. 1 is a cross-sectional view showing a cross-sectional configuration of battery 1 according to the present embodiment. FIG. 2 is a plan view of power generation element 10 of battery 1 according to the present embodiment. Specifically, FIG. 1 shows a cross section taken along line I-I shown in FIG. 2.

As shown in FIG. 1, battery 1 according to the present embodiment includes power generation element 10 which includes a plurality of plate-shaped unit cells 100. Unit cells 100 are electrically connected in parallel and are stacked in a direction normal to a main surface. Battery 1 is, for example, an all solid-state battery. Battery 1 further includes insulating members 21 and 22 and conductive members 31 and 32.

In an example shown in FIG. 1, power generation element 10 includes eight unit cells 100. The number of unit cells 100 included in power generation element 10 may be two or more, and may be, for example, two, three or more, or four or more.

Although the shape of power generation element 10 in plan view is rectangular as shown in FIG. 2, the shape is not limited to this shape. The shape of power generation element 10 in plan view may be polygonal such as square, hexagonal, or octagonal, or may be circular, oval, or the like.

As shown in FIG. 1, power generation element 10 includes main surfaces 11 and 12. Main surfaces 11 and 12 face away from each other and are parallel to each other. A direction orthogonal to main surface 11 or main surface 12 is the direction normal to the main surface, and is the direction of the z-axis in the figure. In a cross-sectional view such as FIG. 1, the thickness of each layer is exaggerated to make it easier to understand the layer structure of power generation element 10.

As shown in FIG. 2, power generation element 10 includes side surfaces 13 and 14 which face away from each other and side surfaces 15 and 16 which face away from each other.

Side surface 13 is an example of a first side surface, and as shown in FIG. 1, depressions 13a and projections 13b which are alternately arranged in the direction normal to the main surface are provided. In side surface 13, positive electrode layers 120 in unit cells 100 protrude more than negative electrode layers 110. Specifically, an end surface of negative electrode layer 110 is an inclination surface which is inclined relative to the direction normal to the main surface, and thus positive electrode layer 120 protrudes more than negative electrode layer 110. Depression 13a includes the inclination surface which is the end surface of negative electrode layer 110. In depressions 13a of side surface 13, insulating members 21 are arranged. Conductive member 31 is provided to cover projections 13b of side surface 13. Conductive member 31 corresponds to the extraction electrode of the positive electrode in power generation element 10.

Side surface 14 is an example of a second side surface, and depressions 14a and projections 14b which are alternately arranged in the direction normal to the main surface are provided. In side surface 14, negative electrode layers 110 in unit cells 100 protrude more than positive electrode layers 120. Specifically, an end surface of positive electrode layer 120 is an inclination surface which is inclined relative to the direction normal to the main surface, and thus negative electrode layer 110 protrudes more than positive electrode layer 120. Depression 14a includes the inclination surface which is the end surface of positive electrode layer 120. In depressions 14a of side surface 14, insulating members 22 are arranged. Conductive member 32 is provided to cover projections 14b of side surface 14. Conductive member 32 corresponds to the extraction electrode of the negative electrode in power generation element 10.

Side surfaces 15 and 16 shown in FIG. 2 are flat surfaces which are parallel to each other. Side surfaces 15 and 16 include the long sides of a rectangle when power generation element 10 is viewed in plan view. In the present embodiment, current is drawn from each of side surfaces 13 and 14 of power generation element 10. Hence, the distance between side surface 13 and side surface 14 is increased, and thus conductive members 31 and 32 can be significantly separated from each other, with the result that the occurrence of a short circuit can be suppressed.

As described above, in side surface 13, negative electrode layers 110 in unit cells 100 are covered by insulating member 21, and positive electrode layers 120 in unit cells 100 protrude more than negative electrode layers 110. Hence, positive electrode layers 120 can be easily electrically connected via conductive member 31.

Likewise, in side surface 14, positive electrode layers 120 in unit cells 100 are covered by insulating member 22, and negative electrode layers 110 in unit cells 100 protrude more than positive electrode layers 120. Hence, negative electrode layers 110 can be easily electrically connected via conductive member 32.

With the configuration described above, in each of side surfaces 13 and 14, the occurrence of a short circuit between negative electrode layers 110 and positive electrode layers 120 can be suppressed. The occurrence of a short circuit is suppressed, and thus it is possible to reduce the thickness of unit cells 100, with the result that it is possible to realize battery 1 which can achieve both a high capacity density and high reliability.

### [2. Configuration of unit cell]

The configuration of unit cell 100 will then be described with reference to FIG. 1.

As shown in FIG. 1, each of unit cells 100 includes negative electrode layer 110, positive electrode layer 120, and solid electrolyte layer 130 located between negative electrode layer 110 and positive electrode layer 120. Negative electrode layer 110 includes negative electrode current collector 111 and negative electrode active material layer 112. Positive electrode layer 120 includes positive electrode current collector 121 and positive electrode active material layer 122. In each of unit cells 100, negative electrode current collector 111, negative electrode active material layer 112, solid electrolyte layer 130, positive electrode active material layer 122, and positive electrode current collector 121 are stacked in this order in the direction normal to the main surface.

The configurations of unit cells 100 are substantially the same as each other. In an adjacent pair of unit cells 100, the order of arrangement of the individual layers is reversed. For example, in FIG. 1, in unit cell 100 of the lowermost layer, positive electrode current collector 121, positive electrode active material layer 122, solid electrolyte layer 130, negative electrode active material layer 112, and negative electrode current collector 111 are stacked in this order toward the positive side of the z-axis. By contrast, in unit cell 100 located one layer above unit cell 100 of the lowermost layer, negative electrode current collector 111, negative electrode active material layer 112, solid electrolyte layer 130, positive electrode active material layer 122, and positive electrode current collector 121 are stacked in this order.

In the present embodiment, in the adjacent pair of unit cells 100, one of negative electrode current collector 111 and positive electrode current collector 121 is shared. For example, unit cell 100 of the lowermost layer and unit cell 100 located one layer above unit cell 100 of the lowermost layer share negative electrode current collector 111.

Specifically, as shown in FIG. 1, in unit cells 100, an adjacent pair of negative electrode layers 110 share negative electrode current collector 111 thereof. On both the main surfaces of negative electrode current collector 111 which is shared, negative electrode active material layers 112 are provided. The end surface of negative electrode current collector 111 shared is flush with the end surface of one of the adjacent pair of negative electrode active material layers 112.

An adjacent pair of positive electrode layers 120 share positive electrode current collector 121 thereof. On both the main surfaces of positive electrode current collector 121 which is shared, positive electrode active material layers 122 are provided. The end surface of positive electrode current collector 121 shared is flush with the end surface of one of the adjacent pair of positive electrode active material layers 122.

Each of negative electrode current collector 111 and positive electrode current collector 121 is a conductive member which is foil-shaped, plate-shaped, or mesh-shaped. Each of negative electrode current collector 111 and positive electrode current collector 121 may be, for example, a conductive thin film. Examples of the material of negative electrode current collector 111 and positive electrode current collector 121 which can be used include metals such as stainless steel (SUS), aluminum (Al), copper (Cu), and nickel (Ni). Negative electrode current collector 111 and positive electrode current collector 121 may be formed using different materials.

Although the thickness of each of negative electrode current collector 111 and positive electrode current collector 121 is, for example, greater than or equal to 5 µm and less than or equal to 100 µm, the thickness is not limited to this range. Negative electrode active material layer 112 is in contact with the main surface of negative electrode current collector 111. Negative electrode current collector 111 may include a current collector layer which is provided in a part where negative electrode current collector 111 is in contact with negative electrode active material layer 112 and which includes a conductive material. Positive electrode active material layer 122 is in contact with the main surface of positive electrode current collector 121. Positive electrode current collector 121 may include a current collector layer which is provided in a part where positive electrode current collector 121 is in contact with positive electrode active material layer 122 and which includes a conductive material.

Negative electrode active material layer 112 is arranged on the main surface of negative electrode current collector 111 on the side of positive electrode layer 120. Negative electrode active material layer 112 includes, for example, a negative electrode active material as an electrode material. Negative electrode active material layer 112 is arranged opposite positive electrode active material layer 122.

As the negative electrode active material contained in negative electrode active material layer 112, for example, a negative electrode active material such as graphite or metallic lithium can be used. As the material of the negative electrode active material, various types of materials which can withdraw and insert ions of lithium (Li), magnesium (Mg), or the like can be used.

As a material contained in negative electrode active material layer 112, for example, a solid electrolyte such as an inorganic solid electrolyte may be used. Examples of the inorganic solid electrolyte which can be used include a sulfide solid electrolyte, an oxide solid electrolyte, and the like. As the sulfide solid electrolyte, for example, a mixture of lithium sulfide (Li₂S) and phosphorus pentasulfide (P₂S₅) can be used. As the material contained in negative electrode active material layer 112, for example, a conductive material such as acetylene black, a binder for binding such as polyvinylidene fluoride, or the like may be used.

A paste-like paint in which the material contained in negative electrode active material layer 112 is kneaded together with a solvent is applied on the main surface of negative electrode current collector 111 and is dried, and thus negative electrode active material layer 112 is produced. After the drying, negative electrode layer 110 (which is also referred to as the negative electrode plate) including negative electrode active material layer 112 and negative electrode current collector 111 may be pressed so that the density of negative electrode active material layer 112 is increased. Although the thickness of negative electrode active material layer 112 is, for example, greater than or equal to 5 µm and less than or equal to 300 µm, the thickness is not limited to this range.

Positive electrode active material layer 122 is arranged on the main surface of positive electrode current collector 121 on the side of negative electrode layer 110. Positive electrode active material layer 122 is, for example, a layer which includes a positive electrode material such as an active material. The positive electrode material is a material which forms the counter electrode of the negative electrode material. Positive electrode active material layer 122 includes, for example, a positive electrode active material.

Examples of the positive electrode active material contained in positive electrode active material layer 122 which can be used include lithium cobaltate composite oxide (LCO), lithium nickelate composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), lithium-nickel-manganese-cobalt composite oxide (LNMCO), and the like. As the material of the positive electrode active material, various types of materials which can withdraw and insert ions of Li, Mg, or the like can be used.

As the material contained in positive electrode active material layer 122, for example, a solid electrolyte such as an inorganic solid electrolyte may be used. Examples of the inorganic solid electrolyte which can be used include a sulfide solid electrolyte, an oxide solid electrolyte, and the like. As the sulfide solid electrolyte, for example, a mixture of Li₂S and P₂S₅ can be used. The surface of the positive electrode active material may be coated with a solid electrolyte. As the material contained in positive electrode active material layer 122, for example, a conductive material such as acetylene black, a binder for binding such as polyvinylidene fluoride, or the like may be used.

A paste-like paint in which the material contained in positive electrode active material layer 122 is kneaded together with a solvent is applied on the main surface of positive electrode current collector 121 and is dried, and thus positive electrode active material layer 122 is produced. After the drying, positive electrode layer 120 (which is also referred to as the positive electrode plate) including positive electrode active material layer 122 and positive electrode current collector 121 may be pressed so that the density of positive electrode active material layer 122 is increased. Although the thickness of positive electrode active material layer 122 is, for example, greater than or equal to 5 µm and less than or equal to 300 µm, the thickness is not limited to this range.

Solid electrolyte layer 130 is arranged between negative electrode active material layer 112 and positive electrode active material layer 122. Solid electrolyte layer 130 is in contact with negative electrode active material layer 112 and positive electrode active material layer 122. Solid electrolyte layer 130 is a layer which includes an electrolyte material. As the electrolyte material, a known battery electrolyte can be generally used. The thickness of solid electrolyte layer 130 may be greater than or equal to 5 µm and less than or equal to 300 µm or may be greater than or equal to 5 µm and less than or equal to 100 µm.

Solid electrolyte layer 130 includes a solid electrolyte. As the solid electrolyte, for example, a solid electrolyte such as an inorganic solid electrolyte can be used. Examples of the inorganic solid electrolyte which can be used include a sulfide solid electrolyte, an oxide solid electrolyte, and the like. As the sulfide solid electrolyte, for example, a mixture of Li₂S and P₂S₅ can be used. Solid electrolyte layer 130 may contain, in addition to the electrolyte material, for example, a binder for binding such as polyvinylidene fluoride or the like.

In the present embodiment, negative electrode active material layer 112, positive electrode active material layer 122, and solid electrolyte layer 130 are maintained in a parallel flat plate shape. In this way, it is possible to suppress the occurrence of a crack or a collapse caused by bending. Negative electrode active material layer 112, positive electrode active material layer 122, and solid electrolyte layer 130 may be combined and smoothly curved.

Negative electrode active material layer 112 may be smaller than negative electrode current collector 111 in plan view. In other words, in the main surface of negative electrode current collector 111 on the side of positive electrode layer 120, a part where negative electrode active material layer 112 is not provided may be present. Likewise, positive electrode active material layer 122 may be smaller than positive electrode current collector 121 in plan view. In other words, in the main surface of positive electrode current collector 121 on the side of negative electrode layer 110, a part where positive electrode active material layer 122 is not provided may be present. In the part of the main surface of each current collector where the active material layer is not provided, solid electrolyte layer 130 may be provided.

### [3. Structure of end surface of unit cell]

The structure of the end surface of unit cell 100 will then be described with reference to FIG. 3A. FIG. 3A is a cross-sectional view showing a cross-sectional configuration of a first example of the unit cell included in power generation element 10 in the present embodiment.

Unit cell 100A shown in FIG. 3A is one of unit cells 100 shown in FIG. 1. Specifically, unit cell 100A is unit cell 100 which is located in the uppermost layer.

Unit cell 100A includes: protrusion portion 113 in which negative electrode layer 110 protrudes more than positive electrode layer 120; and protrusion portion 123 in which positive electrode layer 120 protrudes more than negative electrode layer 110. In the present embodiment, protrusion portions 123 and 113 are respectively provided in two end surfaces 103 and 104 of unit cell 100A which face away from each other.

Each of protrusion portions 113 and 123 is formed by obliquely cutting the end surface of plate-shaped unit cell 100A relative to the direction normal to the main surface. In the present embodiment, the end surface of unit cell 100A is collectively cut, and thus the end surface is formed into an inclination surface serving as a flat surface which is inclined relative to the direction normal to the main surface.

Specifically, end surface 103 of unit cell 100A includes end surface 110a of negative electrode layer 110, end surface 120a of positive electrode layer 120, and end surface 130a of solid electrolyte layer 130. End surfaces 110a, 120a, and 130a described above are flush with each other. End surface 104 of unit cell 100A includes end surface 110b of negative electrode layer 110, end surface 120b of positive electrode layer 120, and end surface 130b of solid electrolyte layer 130. End surfaces 110b, 120b, and 130b described above are flush with each other. Although end surfaces 103 and 104 are, for example, parallel to each other, the present embodiment is not limited to this configuration. At least one of end surface 103 or end surface 104 may be a curved surface which is convex or concave. At least one of end surface 103 or end surface 104 may include a plurality of inclination surfaces whose inclination angles are different.

End surface 110a of negative electrode layer 110 is an example of a first inclination surface which is inclined relative to the direction normal to the main surface. End surface 110a includes end surface 111a of negative electrode current collector 111 and end surface 112a of negative electrode active material layer 112. End surfaces 111a and 112a are flush with each other.

End surface 120a of positive electrode layer 120 is an example of a third inclination surface which is inclined relative to the direction normal to the main surface. End surface 120a includes end surface 121a of positive electrode current collector 121 and end surface 122a of positive electrode active material layer 122. End surfaces 121a and 122a are flush with each other.

End surface 120a of positive electrode layer 120 does not need to be an inclination surface, and may be a surface which is orthogonal to the main surface. At least a part of end surface 130a of solid electrolyte layer 130 may be a surface which is orthogonal to the main surface. In other words, only end surface 110a of negative electrode layer 110 or only end surface 110a and a part of end surface 130a of solid electrolyte layer 130 may be an inclination surface.

End surface 120b of positive electrode layer 120 is an example of a second inclination surface which is inclined relative to the direction normal to the main surface. End surface 120b includes end surface 121b of positive electrode current collector 121 and end surface 122b of positive electrode active material layer 122. End surfaces 121b and 122b are flush with each other.

End surface 110b of negative electrode layer 110 is an example of a fourth inclination surface which is inclined relative to the direction normal to the main surface. End surface 110b includes end surface 111b of negative electrode current collector 111 and end surface 112b of negative electrode active material layer 112. End surfaces 111b and 112b are flush with each other.

End surface 110b of negative electrode layer 110 does not need to be an inclination surface, and may be a surface which is orthogonal to the main surface. At least a part of end surface 130b of solid electrolyte layer 130 may be a surface which is orthogonal to the main surface. In other words, only end surface 120b of positive electrode layer 120 or only end surface 120b and a part of end surface 130b of solid electrolyte layer 130 may be an inclination surface.

### [4. Structure of side surface of power generation element]

The structure of the side surface of power generation element 10 will then be described with reference to FIG. 1 as necessary by use of FIGS. 3A, 3B, 3C, 4A, and 4B.

In power generation element 10 in the present embodiment, as described above, the adjacent pair of unit cells 100 share one current collector. In order to realize this configuration, in power generation element 10 shown in FIG. 1, not only unit cell 100A shown in FIG. 3A but also unit cell 100B shown in FIG. 3B and unit cell 100C shown in FIG. 3C are combined to be stacked.

FIGS. 3B and 3C are respectively cross-sectional views showing cross-sectional configurations of second and third examples of the unit cell included in power generation element 10 in the present embodiment.

Unit cell 100B shown in FIG. 3B has a configuration in which positive electrode current collector 121 is omitted from unit cell 100A shown in FIG. 3A. In other words, positive electrode layer 120B of unit cell 100B includes only positive electrode active material layer 122.

Unit cell 100C shown in FIG. 3C has a configuration in which negative electrode current collector 111 is omitted from unit cell 100A shown in FIG. 3A. In other words, negative electrode layer 110C of unit cell 100C includes only negative electrode active material layer 112. In FIG. 3C, as compared with FIGS. 3A and 3B, the order of the layers stacked is reversed.

FIG. 4A is a cross-sectional view showing a cross-sectional configuration of power generation element 10 in the present embodiment. As shown in FIG. 4A, power generation element 10 has a structure in which on unit cell 100C serving as the lowermost layer, unit cells 100B and unit cells 100C are alternately stacked, and unit cell 100A serving as the uppermost layer is stacked on unit cell 100C.

The number and the combination of unit cells included in power generation element 10 are not particularly limited. For example, only a plurality of unit cells 100A may be repeatedly stacked. A plurality of unit cells 100A are stacked such that the order of arrangement of the layers is alternately reversed, and thus it is possible to form power generation element 10A shown in FIG. 4B. FIG. 4B is a cross-sectional view showing a cross-sectional configuration of a variation of the power generation element in the present embodiment.

In this case, as shown in FIG. 4B, the adjacent pair of unit cells 100A do not share the current collector. In other words, two current collectors of the same polarity are placed on top of each other. Here, an adhesive layer may be provided between the current collectors. Although the adhesive layer is, for example, conductive, the adhesive layer does not need to be conductive.

In this way, in side surface 13 of power generation element 10, protrusion portions 123 of positive electrode layers 120 are aligned to form projections 13b. In side surface 14, protrusion portions 113 of negative electrode layers 110 are aligned to form projections 14b.

Specifically, in side surface 13, positive electrode layers 120 protrude to provide projections 13b, and negative electrode layers 110 are depressed to provide depressions 13a. In power generation element 10, the protrusion portions of positive electrode layers 120 or the protrusion portions of negative electrode layers 110 in the adjacent pair of unit cells 100 are aligned, and thus the same number of projections 13b and the same number of depressions 13a as approximately half the number of unit cells 100 stacked are provided. In the example shown in FIG. 1, five projections 13b and four depressions 13a are arranged alternately and repeatedly in the direction normal to the main surface.

Depression 13a is an example of a first depression, and includes end surface 110a of negative electrode layer 110. Specifically, as shown in FIG. 4A, depression 13a includes end surface 111a of negative electrode current collector 111 and end surfaces 112a of two negative electrode active material layers 112. End surfaces 111a and 112a are inclination surfaces, and thus depression 13a is formed.

The inclination angle of the end surface is defined as an angle formed by main surface 11 and the end surface, and is, for example, greater than or equal to 30° and less than or equal to 60°. Although the inclination angle is 45° as an example, the inclination angle is not limited to this angle. As the inclination angle is decreased, deeper depression 13a can be formed, and thus it is possible to suppress the occurrence of a short circuit. As the inclination angle is increased, a larger effective area of unit cell 100 can be secured, and thus it is possible to achieve a high capacity density. The same is true for depression 14a which will be described later.

Projection 13b is an example of a first projection, and includes end surface 120a of positive electrode layer 120. Specifically, projection 13b includes end surface 121a of positive electrode current collector 121 and end surfaces 122a of two positive electrode active material layers 122. End surfaces 121a and 122a are inclination surfaces, and thus the distance between the tip end of projection 13b and depression 13a can be increased.

In side surface 14, negative electrode layers 110 protrude to provide projections 14b, and positive electrode layers 120 are depressed to provide depressions 14a. In power generation element 10, the protrusion portions of positive electrode layers 120 or the protrusion portions of negative electrode layers 110 in the adjacent pair of unit cells 100 are aligned, and thus the same number of projections 14b and the same number of depressions 14a as approximately half the number of unit cells 100 stacked are provided. In the example shown in FIG. 1, four projections 14b and five depressions 14a are arranged alternately and repeatedly in the direction normal to the main surface.

Depression 14a is an example of a second depression, and includes end surface 120b of positive electrode layer 120. Specifically, as shown in FIG. 4A, depression 14a includes end surface 121b of positive electrode current collector 121 and end surfaces 122b of two positive electrode active material layers 122. End surfaces 121b and 122b are inclination surfaces, and thus depression 14a is formed.

Projection 14b is an example of a second projection, and includes end surface 110b of negative electrode layer 110. Specifically, as shown in FIG. 4B, projection 14b includes end surface 111b of negative electrode current collector 111 and end surfaces 112b of two negative electrode active material layers 112. End surfaces 111b and 112b are inclination surfaces, and thus the distance between the tip end of projection 14b and depression 14a can be increased.

### [5. Insulating member]

Insulating members 21 and 22 will then be described with reference to FIG. 1. In the following description, end surfaces 110a, 110b, 120a, 120b, 130a, and 130b are as shown in FIG. 4A.

Insulating member 21 is an example of a first insulating member, and is arranged in depression 13a as shown in FIG. 1. Specifically, insulating member 21 covers end surface 110a of negative electrode layer 110. Specifically, insulating member 21 covers entire end surface 110a of negative electrode layer 110 and end surface 130a of solid electrolyte layer 130. Insulating member 21 may cover end surface 122a of positive electrode active material layer 122. Insulating member 21 does not cover end surface 121a of positive electrode current collector 121. Insulating member 21 is provided in side surface 13, and thus in side surface 13, end surface 110a of negative electrode layer 110 is not exposed, and at least a part of end surface 120a of positive electrode layer 120 is exposed.

Insulating member 22 is an example of a second insulating member, and is arranged in depression 14a. Specifically, insulating member 22 covers end surface 120b of positive electrode layer 120. Specifically, insulating member 22 covers entire end surface 120b of positive electrode layer 120 and end surface 130b of solid electrolyte layer 130. Insulating member 22 may cover end surface 112b of negative electrode active material layer 112. Insulating member 22 does not cover end surface 111b of negative electrode current collector 111. Insulating member 22 is provided in side surface 14, and thus in side surface 14, end surface 120b of positive electrode layer 120 is not exposed, and at least a part of end surface 110b of negative electrode layer 110 is exposed.

Each of insulating members 21 and 22 is formed using an insulating material which is electrically insulating. Although as the insulating material, for example, an epoxy resin material can be used, an inorganic material may be used. The insulating material which can be used is selected based on various properties such as flexibility, a gas barrier property, impact resistance, and heat resistance. Although insulating members 21 and 22 are formed using the same material, they may be formed using different materials.

In each of side surfaces 15 and 16, an insulating member may be arranged. For example, the insulating members may cover entire side surfaces 15 and 16, and may be connected to insulating members 21 arranged in depressions 13a of side surface 13 and insulating members 22 arranged in depressions 14a of side surface 14. In other words, insulating members 21 and 22 may be integrally formed with the insulating members which cover side surfaces 15 and 16.

Each of outer surface 21a of insulating member 21 and outer surface 22a of insulating member 22 is a flat surface. Each of outer surfaces 21a and 22a is orthogonal to the main surface. Outer surfaces 21a and 22a are respectively located inward of the tip ends of projections 13b and 14b.

The shapes of insulating members 21 and 22 are not limited to those in the example shown in FIG. 1.

FIG. 5 is a cross-sectional view showing a variation of the insulating members in the present embodiment. Insulating members 221 and 222 shown in FIG. 5 have outer surfaces 221a and 222a which are convexly curved outward. In this case, a part of outer surface 221a may protrude more than the tip end of projection 13b. A part of outer surface 222a may protrude more than the tip end of projection 14b. At least one of outer surface 221a or outer surface 222a may be concavely curved.

FIG. 6 is a cross-sectional view showing another variation of the insulating members in the present embodiment. Insulating members 321 and 322 shown in FIG. 6 have outer surfaces 321a and 322a which are flat surfaces orthogonal to the main surface. Outer surfaces 321a are flush with the tip ends of projections 13b. Outer surfaces 322a are flush with the tip ends of projections 14b.

In this way, the projections 13b and 14b are securely supported by insulating members 321 and 322, and thus the occurrence of breakage is suppressed. Hence, it is possible to realize a highly reliable battery.

### [6. Conductive member]

Conductive members 31 and 32 will then be described with reference to FIG. 1.

Conductive member 31 is an example of a first conductive member, and is in contact with projections 13b. Specifically, conductive member 31 covers insulating members 21. More specifically, conductive member 31 is provided to be in contact with projections 13b so as to straddle insulating members 21. In this way, conductive member 31 electrically connects positive electrode layers 120 to function as the extraction electrode of the positive electrode in battery 1. In the present embodiment, conductive member 31 covers entire side surface 13 from the end of main surface 11 to the end of main surface 12 in power generation element 10.

Conductive member 32 is an example of a second conductive member, and is in contact with projections 14b. Specifically, conductive member 32 covers insulating members 22. More specifically, conductive member 32 is provided to be in contact with projections 14b so as to straddle insulating members 22. In this way, conductive member 32 electrically connects negative electrode layers 110 to function as the extraction electrode of the negative electrode in battery 1. In the present embodiment, conductive member 32 covers entire side surface 14 from the end of main surface 11 to the end of main surface 12 in power generation element 10.

Conductive members 31 and 32 are formed using a resin material or the like which is conductive. Conductive members 31 and 32 may also be formed using a metal material such as solder. The conductive material which can be used is selected based on various properties such as flexibility, a gas barrier property, impact resistance, heat resistance, and solder wettability. Although conductive members 31 and 32 are formed using the same material, they may be formed using different materials.

The shapes of conductive members 31 and 32 are not particularly limited. For example, conductive member 31 may cover only a part of side surface 13. The length of conductive member 31 along the direction of the y-axis may be shorter than the length of side surface 13 along the direction of the y-axis. The same may be true for conductive member 32. Conductive member 31 may be provided for each of projections 13b. Conductive member 32 may be provided for each of projections 14b. Conductive members 31 and 32 are electrically connected to each other.

### [7. Manufacturing method]

A method for manufacturing battery 1 will then be described with reference to FIG. 7A.

FIG. 7A is a flowchart showing a method for manufacturing battery 1 according to the present embodiment.

As shown in FIG. 7A, a plurality of plate-shaped unit cells are first prepared (S10). The prepared unit cells are, for example, unit cells in which the end surfaces of unit cells 100A, 100B, and 100C shown in FIGS. 3A to 3C have not been processed. Although the end surfaces which have not been processed are, for example, flat surfaces orthogonal to the main surface, they may be inclination surfaces.

Then, the end surfaces of the prepared unit cells are processed to be inclined (S20). Specifically, in the first end surface of each of the unit cells, end surface 110a of negative electrode layer 110 is processed into an inclination surface, and thus positive electrode layer 120 is caused to protrude more than negative electrode layer 110. Furthermore, in the second end surface of each of the unit cells, end surface 120a of positive electrode layer 120 is processed into an inclination surface, and thus negative electrode layer 110 is caused to protrude more than positive electrode layer 120. Here, in the case of unit cell 100A, the first end surface and the second end surface are end surfaces 103 and 104 shown in FIG. 3A which have not been processed. The same is true for unit cells 100B and 100C.

In the present embodiment, the end surfaces of the unit cells are collectively processed. Hence, the end surfaces of negative electrode layer 110, positive electrode layer 120, and solid electrolyte layer 130 are inclination surfaces. In this way, unit cells 100A, 100B, and 100C whose end surfaces are inclination surfaces are formed.

The end faces are processed by cutting using a cutting blade or polishing. The cutting blade is obliquely inclined relative to the direction normal to the main surface, and thus the end surfaces of the unit cells are formed into the inclination surfaces.

Examples of a cutting method which can be used include shear cutting, score cutting, razor cutting, ultrasonic cutting, laser cutting, jet cutting, and other various types of cutting. For example, in the shear cutting, various types of cutting blades such as a Goebel slitting blade, a gang slitting blade, a rotary chopper blade, and a shear blade can be used. A Thomson blade can also be used.

As the polishing, physical or chemical polishing can be utilized. The method for forming the inclination surface is not limited to these methods.

Then, a plurality of unit cells 100A, 100B, and 100C are stacked (S30). Specifically, positive electrode layers 120 or negative electrode layers 110 are caused to face each other, protrusion portions 123 of positive electrode layers 120 are aligned and protrusion portions 113 of negative electrode layers 110 are aligned and unit cells 100A, 100B, and 100C are stacked. In this way, for example, power generation element 10 shown in FIG. 4A is formed.

Then, insulating members 21 and 22 are respectively arranged in depressions 13a and 14a (S40). Specifically, insulating members 21 are arranged to cover end surfaces 110a of negative electrode layers 110 included in depressions 13a, and insulating members 22 are arranged to cover end surfaces 120b of positive electrode layer 120 included in depressions 14a.

Insulating members 21 and 22 are arranged, for example, by applying and curing a flowable resin material. The application is performed, for example, by inkjet or screen printing or by dipping the end surfaces of the unit cells in the resin material. The curing is performed by drying, heating, application of light, or the like depending on the resin material used.

Then, conductive member 31 which electrically connects protrusion portions 123 of positive electrode layers 120 is arranged, and conductive member 32 which electrically connects protrusion portions 113 of negative electrode layers 110 is arranged (S50). For example, a conductive resin is applied and cured to cover outer surfaces 21a of insulating members 21 and projections 13b which are not covered by insulating members 21, and thus conductive member 31 is arranged. A conductive resin is applied and cured to cover outer surfaces 22a of insulating members 22 and projections 14b which are not covered by conductive members 22, and thus conductive member 32 is arranged. Conductive members 31 and 32 may be formed, for example, by printing, plating, vapor deposition, sputtering, welding, soldering, joining, or another method.

Battery 1 shown in FIG. 1 can be manufactured through the steps described above.

In steps S10 and S20, one large unit cell is prepared, and the prepared unit cell is obliquely cut into pieces, with the result that a plurality of unit cells whose end surfaces are inclination surfaces may be formed. In other words, steps S10 and S20 may be performed in the same step. For example, a unit cell which includes both negative electrode current collectors 111 and positive electrode current collectors 121 is cut into pieces, and thus it is possible to form a plurality of unit cells 100A. Unit cells 100A described above are stacked, and thus it is possible to easily form power generation element 10A shown in FIG. 4B.

A step of individually pressing the prepared unit cells in the direction normal to the main surface or a step of stacking a plurality of unit cells and thereafter pressing them in the direction normal to the main surface may be performed.

Although the example is shown in FIG. 7A where the arrangement of insulating members 21 and 22 (S40) is performed after the stacking of the unit cells (S30), the present embodiment is not limited to this example. As shown in FIG. 7B, the stacking of the unit cells (S30) may be performed after the arrangement of the insulating members (S40). FIG. 7B is a flowchart showing another example of the method for manufacturing battery 1 according to the present embodiment.

In an example shown in FIG. 7B, the insulating members are arranged to cover the end surfaces of unit cells 100A, 100B, and 100C which have not been stacked. In other words, the insulating material is individually applied to the end surfaces of the unit cells, the insulating material is cured, and thereafter the unit cells are stacked. The curing of the insulating material may be performed after the stacking.

In FIGS. 7A and 7B, in step S10, unit cells in which the inclination surfaces are previously formed in the end surfaces may be prepared. In other words, unit cells 100A, 100B, or 100C shown in FIGS. 3A to 3C may be prepared. In this case, processing (S20) in which the end surfaces are processed can be omitted.

### (Embodiment 2)

Embodiment 2 will then be described.

Embodiment 2 differs from Embodiment 1 in that in the method for manufacturing a battery, a step of flattening the end surfaces of the projections is included. Differences from Embodiment 1 will be mainly described below, and the description of common points will be omitted or simplified.

The configuration of a battery according to the present embodiment will first be described with reference to FIG. 8. FIG. 8 is a cross-sectional view showing a cross-sectional configuration of battery 401 according to the present embodiment.

As shown in FIG. 8, battery 401 includes power generation element 410 and insulating members 421 and 422. Although battery 401 includes conductive members 31 and 32 as in Embodiment 1, the illustration thereof will be omitted in FIG. 8.

Side surface 413 of power generation element 410 includes depressions 13a and projections 413b which are arranged alternately and repeatedly. Each of projections 413b includes flat surface 413c.

Flat surface 413c is an example of a first flat surface and is at least a part of the end surface of positive electrode layer 120. For example, flat surface 413c includes the end surface of positive electrode current collector 121 and a part of the end surface of positive electrode active material layer 122. Flat surface 413c may include a part of the end surface of solid electrolyte layer 130.

Side surface 414 of power generation element 410 includes depressions 14a and projections 414b which are arranged alternately and repeatedly. Each of projections 414b includes flat surface 414c.

Flat surface 414c is an example of a second flat surface and is at least a part of the end surface of negative electrode layer 110. For example, flat surface 414c includes the end surface of negative electrode current collector 111 and a part of the end surface of negative electrode active material layer 112. Flat surface 414c may include a part of the end surface of solid electrolyte layer 130.

Insulating members 421 are arranged in depressions 13a. Insulating members 421 include outer surfaces 421a. Outer surfaces 421a are flush with flat surfaces 413c of projections 413b.

Insulating members 422 are arranged in depressions 14a. Insulating members 422 include outer surfaces 422a. Outer surfaces 422a are flush with flat surfaces 414c of projections 414b.

As described above, the tip ends of projections 413b and 414b are flattened, and thus it is possible to increase the strength of projections 413b and 414b. Flat surfaces 413c are flush with outer surfaces 421a of insulating members 421, flat surfaces 414c are flush with outer surfaces 422a of insulating members 422, and thus projections 413b and 414b can be securely supported. In this way, the risk of collapse of positive electrode active material layers 122 and negative electrode active material layers 112 can be reduced, and thus it is possible to enhance the reliability of battery 401.

A method for manufacturing battery 401 according to the present embodiment will then be described with reference to FIGS. 9A and 9B.

FIG. 9A is a flowchart showing an example of the method for manufacturing battery 401 according to the present embodiment. As shown in FIG. 9A, steps (from S10 to S40) up to the step of arranging the insulating members are the same as those shown in FIG. 7A in Embodiment 1. In step S40, the insulating material may be arranged to cover the entire projections of the power generation element. A shortage of the insulating material can be avoided, and thus the occurrence of a short circuit can be avoided.

In the present embodiment, after the arrangement of the insulating material, the side surfaces of power generation element 410 are flattened (S45). Specifically, protrusion portions 123 (that is, projections 413b) of positive electrode layers 120 and insulating members 421 are flattened, and protrusion portions 113 (that is, projections 414b) of negative electrode layers 110 and insulating members 422 are flattened. For example, the protrusion portions are exposed, and the side surfaces are polished until flat surfaces 413c and 414c are formed. Instead of the polishing, cutting may be performed.

After they are flattened, conductive members 31 and 32 are arranged to cover flat surfaces 413c and outer surfaces 421a of insulating members 421 and flat surfaces 414c and outer surfaces 422a of insulating members 422 (S50). The surfaces on which conductive members 31 and 32 are arranged are flat, and thus it is possible to accurately arrange conductive members 31 and 32 without gaps.

Although the example is shown where the arrangement of the insulating members (S40) is performed after the stacking of the unit cells (S30) as in Embodiment 1, the present embodiment is not limited to this example. As shown in FIG. 9B, the stacking of the unit cells (S30) may be performed after the arrangement of the insulating members (S40).

In FIGS. 9A and 9B, in step S10, unit cells in which the inclination surfaces are previously formed in the end surfaces may be prepared. In other words, unit cells 100A, 100B, or 100C shown in FIGS. 3A to 3C may be prepared. In this case, processing (S20) in which the end surfaces are processed can be omitted.

### (Embodiment 3)

Embodiment 3 will then be described.

Embodiment 3 differs from Embodiment 1 in that a battery includes sealing members. Differences from Embodiment 1 will be mainly described below, and the description of common points will be omitted or simplified.

FIG. 10 is a cross-sectional view showing a cross-sectional configuration of battery 501 according to the present embodiment. As shown in FIG. 10, battery 501 further includes sealing members 540 in addition to the configuration of battery 1 in Embodiment 1.

Sealing members 540 expose parts of conductive members 31 and 32 and seal power generation element 10. For example, sealing members 540 are provided to prevent power generation element 10 and insulating members 21 and 22 from being exposed.

Sealing members 540 are formed using an insulating material which is electrically insulating. Although as the insulating material, for example, a material for the sealing member of a generally known battery such as a sealant can be used. As the insulating material, for example, a resin material can be used. The insulating material may be a material which is insulating and non-ionically conductive. For example, the insulating material may be at least one of epoxy resin, acrylic resin, polyimide resin, or silsesquioxane.

Sealing members 540 may include a plurality of different insulating materials. For example, sealing members 540 may have a multilayer structure. The individual layers in the multilayer structure may be formed using different materials to have different properties.

Sealing members 540 may include a particulate metal oxide material. Examples of the metal oxide material which can be used include silicon oxide, aluminum oxide, titanium oxide, zinc oxide, cerium oxide, iron oxide, tungsten oxide, zirconium oxide, calcium oxide, zeolite, glass, and the like. For example, sealing members 540 may be formed using a resin material in which a plurality of particles of the metal oxide material are dispersed.

The particle size of the metal oxide material may be less than or equal to the distance between positive electrode current collector 121 and negative electrode current collector 111. Although examples of the particle shape of the metal oxide material include a spherical shape, an ellipsoidal shape, a rod shape, and the like, the present embodiment is not limited to these shapes.

Sealing members 540 are provided, and thus it is possible to enhance the reliability of battery 501 at various points such as mechanical strength, short-circuit prevention, and a moisture-proof property.

In the present embodiment, each of conductive members 31 and 32 is provided to be located below the current collector in the lowermost layer of power generation element 10. Specifically, conductive members 31 and 32 cover a part of the outer surface of sealing member 540 which covers main surface 11 of power generation element 10.

In this way, for example, when battery 501 is mounted on a substrate, the mountability can be enhanced. Gaps are formed between battery 501 and the mounting substrate, and thus heat dissipation performance is enhanced.

At least one of conductive member 31 or conductive member 32 may be provided to be located above the current collector in the uppermost layer of power generation element 10. Specifically, at least one of conductive member 31 or conductive member 32 may cover a part of the outer surface of sealing member 540 which covers main surface 12 of power generation element 10.

### (Embodiment 4)

Embodiment 4 will then be described.

Embodiment 4 differs from Embodiment 1 in that conductive members have a multilayer structure. Differences from Embodiment 1 will be mainly described below, and the description of common points will be omitted or simplified.

FIG. 11 is a cross-sectional view showing a cross-sectional configuration of battery 601 according to the present embodiment. As shown in FIG. 11, battery 601 differs from battery 1 according to Embodiment 1 in that battery 601 includes conductive members 631 and 632 instead of conductive members 31 and 32.

Conductive member 631 has a multilayer structure. Specifically, conductive member 631 includes first layer 631a and second layer 631b.

First layer 631a is the innermost layer in the multilayer structure, and covers protrusion portions 123 of positive electrode layers 120 which are exposed to side surface 13. For example, first layer 631a is formed using a conductive material which is in good contact with positive electrode layers 120.

Second layer 631b is the outermost layer in the multilayer structure, and is exposed to the outside of battery 601. Second layer 631b is, for example, a plating layer or a solder layer. Second layer 631b is formed, for example, by a method such as plating, printing, or soldering.

Conductive member 632 has a multilayer structure. Specifically, conductive member 631 includes first layer 632a and second layer 632b.

First layer 632a is the innermost layer in the multilayer structure, and covers protrusion portions 113 of negative electrode layers 110 which are exposed to side surface 14. For example, first layer 632a is formed using a conductive material which is in good contact with negative electrode layers 110.

Second layer 632b is the outermost layer in the multilayer structure, and is exposed to the outside of battery 601. Second layer 632b is, for example, a plating layer or a solder layer. Second layer 632b is formed, for example, by a method such as plating, printing, or soldering.

For example, a material suitable for mounting on a substrate is used to form second layers 631b and 632b, and thus the mountability of battery 601 can be enhanced. For example, the gas barrier property of first layer 631a or first layer 632a may be higher than that of second layer 631b or second layer 632b. For example, second layer 631b or second layer 632b may be more excellent in flexibility, impact resistance, or solder wettability than first layer 631a or first layer 632a.

Second layer 631b does not need to cover the entire outer surface of first layer 631a. Second layer 631b may cover only a part of first layer 631a. For example, when battery 601 is mounted on a substrate, second layer 631b may be formed on only the mounting part of the substrate.

The number of layers included in conductive member 631 or conductive member 632 may be greater than or equal to three. At least one of conductive member 631 or conductive member 632 may have a single-layer structure as in Embodiment 1.

### (Embodiment 5)

Embodiment 5 will then be described.

Embodiment 5 differs from Embodiment 1 in that insulating members include gaps. Differences from Embodiment 1 will be mainly described below, and the description of common points will be omitted or simplified.

FIG. 12 is a cross-sectional view showing a cross-sectional configuration of battery 701 according to the present embodiment. As shown in FIG. 12, battery 701 differs from battery 1 according to Embodiment 1 in that battery 701 includes insulating members 721 and 722 instead of insulating members 21 and 22.

Each of insulating members 721 and 722 includes gaps 723. Gap 723 is a space in which a predetermined gas is sealed. Although the gas is, for example, dried air, the present embodiment is not limited to the dried air. The size and shape of gap 723 are not particularly limited. Gaps 723 may be provided between insulating members 721 and side surface 13 of power generation element 10 or between insulating members 722 and side surface 14 of power generation element 10. Gaps 723 may also be provided between insulating members 721 and conductive member 31 or between insulating members 722 and conductive member 32.

As described above, gaps 723 are provided in insulating members 721 or insulating members 722, and thus stress relaxation for expansion and contraction associated with charging and discharging of battery 701, mechanical impact, and the like can be performed. In this way, the possibility that battery 701 is destroyed is reduced, and thus reliability can be enhanced.

### (Other embodiments)

Although the battery and the method for manufacturing a battery according to one or a plurality of aspects have been described above based on the embodiments, the present disclosure is not limited to these embodiments. Embodiments obtained by performing various types of variations conceived by a person skilled in the art on the present embodiment and embodiments established by combining constituent elements in different embodiments are also included in the scope of the present disclosure without departing from the spirit of the present disclosure.

For example, unit cell 100 does not need to be limited to the minimum unit which includes negative electrode layer 110, positive electrode layer 120, and solid electrolyte layer 130. Unit cell 100 may include a few minimum units which are stacked in the direction normal to the main surface.

For example, although in the embodiments described above, the example is shown where the first side surface in which positive electrode layers 120 protrude more than negative electrode layers 110 is side surface 13 shown in FIG. 2 and the second side surface in which negative electrode layers 110 protrude more than positive electrode layers 120 is side surface 14, the present disclosure is not limited to this example. The first side surface may be side surface 15 or side surface 16. In other words, the first side surface in which the positive electrode layers protrude more than the negative electrode layers and the second side surface in which the negative electrode layers protrude more than the positive electrode layers may be connected to each other. The first side surface and the second side surface may be side surfaces 15 and 16, respectively. In other words, an electrode may be drawn from a long side of rectangular power generation element 10 in plan view.

The first side surface and the second side surface may be one side surface of power generation element 10. Specifically, the first side surface may be a part of any one of side surfaces 13 to 16, and the second side surface may be another part of the side surface.

In the embodiments described above, various changes, replacement, addition, omission, and the like can be performed in the scope of claims or a scope equivalent thereto.

### [Industrial Applicability]

The present disclosure can be utilized, for example, as batteries for electronic devices, electrical apparatuses, electric vehicles, and the like.

### [Reference Signs List]

1, 401, 501, 601, 701 battery
10, 10A, 410 power generation element
11, 12 main surface
13, 14, 15, 16, 413, 414 side surface
13a, 14a depression
13b, 14b, 413b, 414b projection
21, 22, 221, 222, 321, 322, 421, 422, 721, 722 insulating member
21a, 22a, 221a, 222a, 321a, 322a, 421a, 422a outer surface
31, 32, 631, 632 conductive member
100, 100A, 100B, 100C unit cell
103, 104, 110a, 110b, 111a, 111b, 112a, 112b, 120a, 120b, 121a, 121b, 122a, 122b, 130a, 130b end surface
110, 110C negative electrode layer
111 negative electrode current collector
112 negative electrode active material layer
113, 123 protrusion portion
120, 120B positive electrode layer
121 positive electrode current collector
122 positive electrode active material layer
130 solid electrolyte layer
413c, 414c flat surface
540 sealing member
631a, 632a first layer
631b, 632b second layer
723 gap

## Claims

1. A battery comprising:
a power generation element that includes a plurality of unit cells each including a positive electrode layer, a negative electrode layer, and a solid electrolyte layer located between the positive electrode layer and the negative electrode layer,
wherein the plurality of unit cells are electrically connected in parallel and are stacked in a direction normal to a main surface of the power generation element,
the power generation element includes a first side surface and a second side surface,
in the first side surface, each of the positive electrode layers in the plurality of unit cells protrudes more than each of the negative electrode layers in the plurality of unit cells such that first depressions and first projections arranged alternately in the direction normal to the main surface are provided,
in the second side surface, each of the negative electrode layers in the plurality of unit cells protrudes more than each of the positive electrode layers in the plurality of unit cells such that second depressions and second projections arranged alternately in the direction normal to the main surface are provided,
each of the first depressions includes a first inclination surface that is inclined relative to the direction normal to the main surface and is an end surface of the negative electrode layer,
each of the second depressions includes a second inclination surface that is inclined relative to the direction normal to the main surface and is an end surface of the positive electrode layer,
the battery further comprises:
one or a plurality of first insulating members that are arranged in the first depressions;
one or a plurality of second insulating members that are arranged in the second depressions;
a first conductive member that is in contact with the first projections; and
a second conductive member that is in contact with the second projections,
the positive electrode layers in the plurality of unit cells are electrically connected via the first conductive member, and
the negative electrode layers in the plurality of unit cells are electrically connected via the second conductive member.

2. The battery according to claim 1,
wherein the first conductive member covers the one or the plurality of first insulating members, and
the second conductive member covers the one or the plurality of second insulating members.

3. The battery according to claim 1 or 2,
wherein each of the first projections includes a third inclination surface that is inclined relative to the direction normal to the main surface and is at least a part of an end surface of the positive electrode layer, and
each of the second projections includes a fourth inclination surface that is inclined relative to the direction normal to the main surface and is at least a part of an end surface of the negative electrode layer.

4. The battery according to claim 3,
wherein the first inclination surface, the third inclination surface, and a part of an end surface of the solid electrolyte layer are flush with each other, and
the second inclination surface, the fourth inclination surface, and a part of an end surface of the solid electrolyte layer are flush with each other.

5. The battery according to any one of claims 1 to 4,
wherein each of the first projections includes a first flat surface that is parallel to the direction normal to the main surface and is at least a part of an end surface of the positive electrode layer, and
each of the second projections includes a second flat surface that is parallel to the direction normal to the main surface and is at least a part of an end surface of the negative electrode layer.

6. The battery according to claim 5,
wherein the one or the plurality of first insulating members include a side surface that is flush with the first flat surface, and
the one or the plurality of second insulating members include a side surface that is flush with the second flat surface.

7. The battery according to any one of claims 1 to 6,
wherein each of the positive electrode layers in the plurality of unit cells includes:
a positive electrode current collector; and
a positive electrode active material layer that is arranged on a main surface of the positive electrode current collector on a side of the negative electrode layer, and
each of the negative electrode layers in the plurality of unit cells includes:
a negative electrode current collector; and
a negative electrode active material layer that is arranged on a main surface of the negative electrode current collector on a side of the positive electrode layer.

8. The battery according to claim 7,
wherein in the plurality of unit cells, an adjacent pair of the positive electrode layers share the positive electrode current collector, and
in the plurality of unit cells, an adjacent pair of the negative electrode layers share the negative electrode current collector.

9. The battery according to any one of claims 1 to 8,
wherein at least one of the first conductive member or the second conductive member includes a multilayer structure.

10. The battery according to claim 9,
wherein an outermost layer in the multilayer structure is a plating layer or a solder layer.

11. The battery according to any one of claims 1 to 10, further comprising:
a sealing member that exposes a part of the first conductive member and a part of the second conductive member and seals the power generation element.

12. The battery according to any one of claims 1 to 11,
wherein at least one of the one or the plurality of first insulating members or the one or the plurality of second insulating members includes a gap.

13. The battery according to any one of claims 1 to 12,
wherein the first side surface and the second side surface face away from each other.

14. A method for manufacturing a battery, the method comprising:
preparing a plurality of unit cells each including a positive electrode layer, a negative electrode layer, and a solid electrolyte layer located between the positive electrode layer and the negative electrode layer,
wherein in a first end surface of each of the plurality of unit cells, a first inclination surface that is inclined relative to a direction normal to a main surface of a power generation element is provided on an end surface of the negative electrode layer such that the positive electrode layer protrudes more than the negative electrode layer,
in a second end surface of the unit cell, a second inclination surface that is inclined relative to the direction normal to the main surface is provided on an end surface of the positive electrode layer such that the negative electrode layer protrudes more than the positive electrode layer, and
the method for manufacturing a battery further comprises:
stacking the plurality of unit cells in the direction normal to the main surface by causing positive electrode layers each being the positive electrode layer or negative electrode layers each being the negative electrode layer to face each other, aligning protrusion portions of the positive electrode layers, and aligning protrusion portions of the negative electrode layers,
arranging a first insulating member such that the first insulating member covers the first inclination surface and arranging a second insulating member such that the second insulating member covers the second inclination surface, and
arranging a first conductive member that electrically connects the protrusion portions of the positive electrode layers and arranging a second conductive member that electrically connects the protrusion portions of the negative electrode layers.

15. The method for manufacturing a battery according to claim 14,
wherein the arranging of the first insulating member is performed after the stacking.

16. The method for manufacturing a battery according to claim 14,
wherein the stacking is performed after the arranging of the first insulating member.

17. The method for manufacturing a battery according to any one of claims 14 to 16,
wherein in the preparing, the first end surface and the second end surface of each of the plurality of unit cells are processed to prepare the plurality of unit cells in which first inclination surfaces each being the first inclination surface and second inclination surfaces each being the second inclination surface are provided.

18. The method for manufacturing a battery according to claim 17,
wherein the processing in the preparing is performed by shear cutting, score cutting, razor cutting, ultrasonic cutting, laser cutting, jet cutting, or polishing.

19. The method for manufacturing a battery according to claim 17 or 18,
wherein in the processing in the preparing,
on the first end surface, the end surface of the negative electrode layer, an end surface of the solid electrolyte layer, and an end surface of the positive electrode layer are collectively inclined obliquely relative to the direction normal to the main surface, and
on the second end surface, an end surface of the negative electrode layer, an end surface of the solid electrolyte layer, and the end surface of the positive electrode layer are collectively inclined obliquely relative to the direction normal to the main surface.

20. The method for manufacturing a battery according to any one of claims 14 to 19, further comprising:
flattening, after the stacking and the arranging of the first insulating member have been performed, the protrusion portions of the positive electrode layers and first insulating members each being the first insulating member and flattening the protrusion portions of the negative electrode layers and the second insulating members each being the second insulating member before the arranging of the first conductive member is performed.
